Europäisches Patentamt

European Patent Office

Office européen des brevets

(19)

(11) Veröffentlichungsnummer: **0 248 320**
**A1**

(12) **EUROPÄISCHE PATENTANMELDUNG**

(21) Anmeldenummer: **87107606.3**

(22) Anmeldetag: **25.05.87**

(51) Int. Cl.⁴: **H02H 3/33**

(30) Priorität: **05.06.86 DE 3618924**

(43) Veröffentlichungstag der Anmeldung:
**09.12.87 Patentblatt 87/50**

(84) Benannte Vertragsstaaten:
**AT BE CH DE ES FR GB GR IT LI NL**

(71) Anmelder: **Siemens Aktiengesellschaft Berlin
und München
Wittelsbacherplatz 2
D-8000 München 2(DE)**

(72) Erfinder: **Pohl, Fritz, Dipl.-Phys.
Ahornweg 8
D-8551 Hemhofen(DE)**

(54) **Anordnung zum Erfassen von Fehlerströmen.**

(57) Die Anordnung enthält einen Summenstromwandler mit einer Vormagnetisierungswicklung (6), die von einem Erregerstrom $I_e$ durchflossen ist. Erfindungsgemäß ist im Sekundärkreis eine Einrichtung zur Spannungsüberwachung (14) vorgesehen, die beim Unterschreiten eines vorbestimmten Grenzwertes eines Anteils der Spannung im Sekundärkreis mit gleicher Frequenz wie der Erregerstrom $I_e$ den Haltemagneten (9) auslöst. Mit dieser Spannungsüberwachung (14) erhält man einen allstromsensitiven FI-Schalter, der Fehlerströme, die nicht glatte Gleichfehlerströme sind, spannungsunabhängig schaltet und reine Gleichfehlerströme mit Hilfe seines Erregerstromes erfaßt. Diese Anordnung vereinigt somit die Eigenschaften eines Fehlerstromschutzschalters ohne Elektronik mit einem Differenzstrom-Schutzschalter.

EP 0 248 320 A1

## Anordnung zum Erfassen von Fehlerströmen

Die Erfindung bezieht sich auf eine Anordnung zum Erfassen von Fehlerströmen mit einem Summenstromwandler, dessen Primärstromkreis durch Netzleiter gebildet ist und dessen Sekundärstromkreis einen Haltemagneten enthält und dessen Magnetkern mit einer Vormagnetisierungswicklung versehen ist, die von einem Erregerstrom durchflossen ist.

Bei der Installation von elektrischen Anlagen wird gefordert, daß Ströme, die von einem Verbraucher direkt zur Erde abfließen oder einen anderen Rückweg als über einen Netzleiter nehmen, einen vorbestimmten Grenzwert nicht überschreiten dürfen, da sonst Menschen oder Tiere gefährdet werden können. Diese Schwelle liegt im Bereich von einigen mA.

Zur Anzeige von Wechselfehlerströmen können die Netzleiter als Primärleiter durch einen Summenstromwandler hindurchgeführt werden, dessen Sekundärwicklung in einem Anzeige-oder Auslösestromkreis angeordnet ist. Solange kein Fehlerstrom fließt, ist die Summe der Primärströme, die den Summenstromwandler durchsetzen, Null. Im Kern des Wandlers wird kein magnetischer Fluß erzeugt und an der Sekundärwicklung des Wandlers somit auch keine Spannung induziert. Tritt ein Fehlerstrom auf, so wird die Summe der Ströme ungleich Null und im Sekundärkreis des Wandlers fließt ein Strom, der zum Auslösen eines Schutzschalters tätig werden kann. In dieser Anordnung arbeitet der Summenstromwandler als Transformator. Für die Erfassung glatter Gleichfehlerströme ist die Anordnung nicht geeignet.

Elektronische Differenzstromschutzschalter benutzen in der Regel ebenfalls Summenstromwandler, bei denen der vom Fehlerstrom erzeugte Magnetisierungszustand gemessen wird. Dieser ändert sich sowohl bei Wechselfehlerströmen als auch bei Gleichfehlerströmen, so daß diese Differenzstromschalter allstromsensitiv sind. Dazu wird jedoch eine Versorgungsspannung und eine Auswerteelektronik benötigt. Diese Schalter arbeiten somit nur spannungsabhängig.

Der Erfindung liegt die Aufgabe zugrunde, eine Anordnung zum Erfassen beliebiger Fehlerströme anzugeben, die auch spannungsunabhängig arbeitet; insbesondere sollen bekannte spannungsunabhängige Fehlerstromschutzschalter durch eine zusätzliche spannungsabhängige Signalerzeugung- und Signalverarbeitung allstromsensitiv gemacht werden. Zugleich sollen die Fehlerstromeigenschaften dabei unverändert erhalten bleiben.

Eine bekannte Anordnung zum Erfassen von Fehlerströmen enthält einen Summenstromwandler, der neben seiner Sekundärwicklung noch mit einer Vormagnetisierungswicklung versehen ist, die an eine Spannungsquelle mit höherer Frequenz angeschlossen ist. Die Spannung an der Vormagnetisierungswicklung dient zum Erkennen von Gleichfehlerströmen. Unter Einschaltung eines Filtergliedes wird die vom Wechselfehlerstrom erzeugte Spannung unterdrückt, so daß die vom Wechselstrom induzierte Spannung ein Maß für die Induktivität der Vormagnetisierungswicklung darstellt. Diese Anordnung kann somit nicht spannungsunabhängig einen Schutzschalter betätigen (DE-OS 28 51 381).

Demgegenüber wird die erwähnte Aufgabe erfindungsgemäß gelöst mit den kennzeichnenden Merkmalen des Anspruchs 1. Diese Anordnung löst den Schutzschalter aus, sobald die vom Erregerstrom im Sekundärkreis induzierte Spannung einen vorbestimmten Grenzwert unterschreitet oder Null wird. Sie bildet somit einen allstromsensitiven Fehlerstrom-Schutzschalter, der Fehlerströme, die nicht glatte Gleichfehlerströme sind, spannungsunabhängig schaltet und reine Gleichfehlerströme mit Hilfe seines Erregerstromes erfaßt. Zum Erkennen von Gleichfehlerströmen erhält der Summenstromwandler die zusätzliche Vormagnetisierungswicklung, die mit einem Erregerstrom gespeist wird. Die Amplitude dieses Erregerstromes wird klein gegenüber einem Fehlerstrom eingestellt. Seine Frequenz beträgt wenigstens 200 Hz, vorzugsweise wenigstens 500 Hz, und insbesondere wenigstens 1000 Hz. Durch die kleine Stromamplitude und die erhöhte Frequenz des Erregerstromes wird eine Beeinflussung normaler Fehlerstromschutzschaltereigenschaften vermieden.

Der Summenstromwandler hat einen Kern mit großer Permeabilität und vorzugsweise flacher Hystereseschleife, einer sogenannten F-Schleife, und somit eine geringe Remanenz. Tritt ein Gleichfehlerstrom auf, so durchläuft der Summenstromwandler mit wachsendem Fehlerstrom die flache Hystereseschleife. Beim Übergang vom steilen Ast der Hystereseschleife zur Sättigungsinduktion nimmt der vom Hilfswechselstrom erzeugte Induktionshub immer mehr ab, bis er praktisch Null wird. Die dabei induzierte Spannung nimmt proportional dem Induktionshub ab und betätigt beim Unterschreiten eines vorbestimmten Grenzwertes die Spannungsüberwachung, die einen Auslöser für einen Schutzschalter betätigt.

In einer besonderen Ausführungsform der Anordnung zum Erfassen von Fehlerströmen besteht der Kern des Summenstromwandlers wenigstens zum Teil aus amorphem, ferromagnetischem Werkstoff, einer Legierung mit metallischen Eigenschaften, jedoch ohne Kristallgitter, die deshalb auch allgemein als metallisches Glas bezeichnet wird. Die Hauptbestandteile dieses Werkstoffes können Eisen, Nickel und Kobalt sein mit kristallisationsverzögernden Zusätzen, insbesondere Silizium und Bor sowie gegebenenfalls Molybdän und Mangan (VITROVAC). Mit einem Ringbandkern aus einem derartigen Werkstoff mit einer Rechteck-Hystereseschleife (VITROVAC 6025 Z) kann man beispielsweise Gleichfehlerströme von annähernd 20 mA erkennen. Für die Realisierung eines Differenzstromschutzschalters wird jedoch vorzugsweise ein Kern mit einer flachen Hystereseschleife, einer sogenannten F-Schleife, verwendet (VITROVAC 6025 F), dessen Remanenz im allgemeinen etwa 25 % der Sättigungsinduktion nicht wesentlich überschreitet und vorzugsweise nur etwa höchstens 10 % beträgt. Damit erhält man einen ausreichenden Induktionshub zum Erkennen von pulsierenden Gleichfehlerströmen.

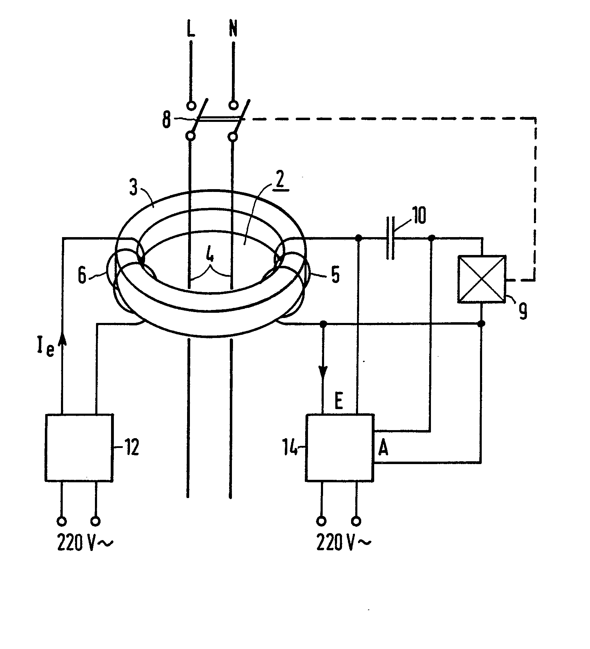

Zur weiteren Erläuterung der Erfindung wird auf die Zeichnung Bezug genommen, in der ein Ausführungsbeispiel einer Anordnung zum Erfassen von Fehlerströmen gemäß der Erfindung - schematisch veranschaulicht ist.

In der Ausführungsform der dargestellten Anordnung ist der Magnetkern 3 eines Summenstromwandlers 2 mit einer Primärwicklung 4 sowie einer Sekundärwicklung 5 und einer zusätzlichen Vormagnetisierungswicklung 6 versehen. Als Primärwicklung sind ein Netzleiter L und ein Mittelpunktsleiter N vorgesehen. Die Netzleitung enthält einen Schutzschalter 8, dessen Haltemagnet 9 im Sekundärkreis des Summenstromwandlers 2 angeordnet ist. In Reihe mit der Sekundärwicklung 5 kann vorzugsweise noch ein Kondensator 10 vorgesehen sein, dessen Kapazität mit der Induktivität der Sekundärwicklung 5 einen Reihenschwingkreis bildet.

Die Vormagnetisierungswicklung 6 ist an ein Netzgerät 12 angeschlossen, das beispielsweise von einer Spannungsquelle für 220 V Wechselstrom gespeist werden kann. Das Netzgerät 12 liefert der Vormagnetisierungswicklung 6 einen Erregerstrom $I_e$ mit vorbestimmter Amplitude und erhöhter Frequenz von vorzugsweise 1000 Hz. Ferner ist eine Spannungsüberwachung 14 vorgesehen, die ebenfalls von einer Spannungsquelle für 220 V Wechselstrom versorgt werden kann. Der Eingang E der Spannungsüberwachung 14 ist der Sekundärwicklung 5 und der Ausgang A der Spannungsüberwachung 14 ist dem Haltemagneten 9 parallelgeschaltet.

Die Spannungsüberwachung 14 betätigt den Haltemagneten 9 des Schutzschalters 8, sobald die Spannung an der Sekundärwicklung 5 einen vorbestimmten Grenzwert unterschreitet. In einer bevorzugten Ausführungsform der Anordnung kann die Überwachung 14 ein Filter enthalten, das nur den Spannungsanteil der Sekundärwicklung mit der Frequenz des Erregerstromes $I_e$ der Vormagnetisierungswicklung 6 durchläßt.

Je größer ein Fehlerstrom in der Primärwicklung 4 ist, desto stärker wird der Magnetkern 3 magnetisiert und desto geringer wird auch seine Permeabilität. Im Falle einer Sättigung durch den Fehlerstrom kann bekanntlich die magnetische Feldstärke geändert werden, ohne daß sich der magnetische Fluß im Kern merklich ändert. Ohne Flußänderung wird aber im Sekundärkreis keine Spannung induziert und das Eingangssignal der Spannungsüberwachung 14 verschwindet. Die Abnahme der Sekundärspannung mit zunehmendem Fehlerstrom in der Primärwicklung wird mit der Spannungsüberwachung 14 erfaßt. Sie schaltet den Haltemagneten 9, sobald sie feststellt, daß sich das vom Erregerstrom $I_e$ induzierte Spannungssignal einem vorbestimmten einstellbaren Grenzwert nähert. Dieser Grenzwert wird so eingestellt, daß er bei den üblichen Ansprechwerten von Fehlerstromschutzschaltern, beispielsweise einem Fehlerstrom von 30 mA oder 50 mA, erreicht wird. Die Spannungsüberwachung 14 wirkt somit als Spannungswächter für die Sekundärspannung. Diese Einrichtung reagiert somit lediglich auf den Erregerstrom $I_e$ und ist unabhängig von Einschaltvorgängen des Netzes.

**Ansprüche**

1. Anordnung zum Erfassen von Fehlerströmen mit einem Summenstromwandler, dessen Primärstromkreis durch Netzleiter gebildet ist und dessen Sekundärstromkreis einen Haltemagneten enthält und dessen Magnetkern mit einer Vormagnetisierungswicklung versehen ist, die von einem Erregerstromkreis $I_e$ durchflossen ist, **dadurch gekennzeichnet**, daß im Sekundärkreis eine Einrichtung zur Spannungsüberwachung (14) vorgesehen ist, die beim Unterschreiten eines vorbestimmten Grenzwertes eines Anteils der Spannung im Sekundärkreis mit gleicher Frequenz wie der Erregerstrom $I_e$ in der Vormagnetisierungswicklung (6) den Haltemagneten (9) auslöst.

2. Anordnung nach Anspruch 1, **dadurch gekennzeichnet**, daß die Frequenz des Erregerstromes $I_e$ der Vormagnetisierungswicklung (6) wenigstens 200 Hz, vorzugsweise mindestens 500 Hz, insbesondere etwa 1000 Hz, beträgt.

3. Anordnung nach Anspruch 1 oder 2 mit einem Reihenkondensator (10) im Sekundärkreis, **dadurch gekennzeichnet**, daß der Reihenkondensator (10) zwischen dem Eingang (E) und dem Ausgang (A) der Spannungsüberwachung (14) angeordnet ist.

L    N

8

3    2

6    4    5

10

$I_e$

9

E

12    14    A

220 V~    220 V~

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 555 303 (BBC) <br> * Das ganze Dokument * | 1,2 | H 02 H 3/33 |
| Y | | 3 | |
| | --- | | |
| X | DE-A-2 555 221 (BBC) <br> * Figur 2; Seite 5, Zeilen 7-20 * | 1,2 | |
| | --- | | |
| Y | DE-A-2 036 497 (SIEMENS) <br> * Figur 1; Patentansprüche * | 3 | |
| | --- | | |
| A | US-A-4 320 433 (YAMAKI) <br> * Zusammenfassung; Figur 4 * | 1,2 | |
| | --- | | |
| A | DE-A-2 713 043 (SIEMENS) <br> * Anspruch 1; Figur 3 * | 1-3 | |
| | ----- | | |

|  |
|---|
| RECHERCHIERTE SACHGEBIETE (Int. Cl.4) |
| H 02 H <br> G 01 R |

Der vorliegende Recherchenbericht wurde für alle Patentansprüche erstellt.

| Recherchenort | Abschlußdatum der Recherche | Prüfer |
|---|---|---|
| DEN HAAG | 02-09-1987 | KOLBE W.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82